# EUROPEAN PATENT APPLICATION

(11) **EP 0 685 183 A2**
(43) Date of publication of application: **06.12.1995**
(21) Application number: 95302957.6
(22) Date of filing: 01.05.1995
(51) Int. Cl.: A46B 15/00

(54) **Toothbrush**

(30) Priority: 02.05.1994 JP 115990/94; 15.07.1994 JP 164206/94; 18.04.1995 JP 92066/95
(71) Applicant: Hukuba, Hiroshi, Nagareyama-shi Chiba-ken (JP)
(72) Inventor: Hukuba, Hiroshi, Nagareyama-shi Chiba-ken (JP)
(74) Representative: Jenkins, Peter David

(57) **Abstract**

An iontophoretic toothbrush comprises a head 12 studded with bristles 10 and a grip 16 containing a battery 14, and one electrode of the battery is constructed to be conductible with the bristles 10 through liquid, while the other electrode of the battery 14 is constructed to be conductible with a conductive plate 32 attached to at least a part of the outside surface of the grip 16. The conductive plate 32 is formed so as to have a U-shaped cross section, and inclined portions 42 are formed on the outside surface of the grip 16 in order to expand and guide the open end edges of the conductive plate 32 when the conductive plate 32 is attached to the grip 16.

## Description

The present invention relates to an iontophoretic toothbrush which contains a battery in a grip of the toothbrush, and which has improved brushing effect by applying an electric current between a user's teeth and bristles of the toothbrush. The present invention also relates to a toothbrush with a head which is separable from a grip portion. Furthermore, the present invention relates to a battery tester for detecting the effectiveness of a battery contained in the iontophoretic toothbrush.

Various types of iontophoretic toothbrushes or electronic toothbrushes (hereinafter referred to as "iontophoretic toothbrush(es)") have been suggested, each of which contains a battery in its grip portion and which is intended to effectively remove dental plaque by applying a feeble electric current between a user's teeth and bristles of the toothbrush through a user's hand holding the grip, and by making use of potential difference. This type of iontophoretic toothbrushes had complicated structures at the beginning of development as described in the official gazette of the Japanese Utility Model (Kokoku) Publication No. SHO 43-5092 and the official gazette of the Japanese Patent Laid-Open (Kokai) Publication No. SHO 60-253461 and, therefore, was expensive. Because of the above reasons, such type of iontophoretic toothbrushes hardly became widespread.

In order to ovarcome the above-described difficulty, the Applicant of this invention constructed, as described in the official gazette of the Japanese Patent (Kokoku) Publication No, SHO 63-1842, a brush head and a grip separable therefrom, and developed a conductive structure with a liquid medium, such as saliva, in order to attain the electric conduct between the bristles and one electrode of the battery. The Applicant thereby succeeded in providing the above-described type of iontophoretic toothbrushes at a relatively low price.

Moreover, the official gazette of the Japanese Patent (Kokoku) Publication No. HEI 6-11341 introduces an iontophoretic toothbrush having a brush head and an grip, which are separable from each other.

Furthermore, the official gazette of the Japanese Patent (Kokoku) Publication No. HEI 6-38859 discloses an iontophoretic toothbrush which realizes a simple structure, low costs, and a small size. This iontophoretic toothbrush comprises: a brush head; a grip; a cylindrical battery to be placed in the base end of the grip; a terminal which is attached to a part of the outer periphery of the grip and which is connected to one electrode of the battery; and a conductive bar which is placed inside of the grip and extends in the axial direction of the grip, which ends adjacent to bristles of the toothbrush, and which is connected to the other electrode of the battery. The terminal end of the conductive bar is constructed to communicate with an area close to the bristles through a liquid path.

Since in these days people's consciousness about the health of teeth has been raised and the plaque removal effect of this type of iontophoretic toothbrushes has been reconfirmed by the Dental Association and other organizations in many fields, there is an increasing demand for providing this type of iontophoretic toothbrushes at a lower price.

As a condition to satisfy such demand, for example, in the iontophoretic toothbrush with a brush head and a grip which are separable from each other, the disposable and replaceable brush head must be made as short and small as possible.

With both the iontophoretic toothbrush with a brush head and a grip, which are separable from each other, and the iontophoretic toothbrush with a brush head and a grip which are integrally constructed, it is required to make its neck portion thin. Also, it is desirable to reduce the weight of the iontophoretic toothbrush.

However, the conventional iontophoretic toothbrushes have a problem that they cannot fully satisfy the above-described demands.

Moreover, in the iontophoretic toothbrush described in the official gazette of the Japanese Patent (Kokoku) Publication No. HEI 6-11341, there is a possibility that liquid such as water or saliva may enter into a gap formed between the brush head and the grip. This brings about problems that the battery contained in the grip tends to leak and that the electrodes corrode.

Further, since the iontophoretic toothbrush described in the official gazette of the Japanese Patent (Kokoku) Publication No. HEI 6-38859 is constructed so as to receive a battery in a battery-receiving opening which is formed at the base end of the grip, there is a possibility that liquid such as water or saliva may enter into this battery-receiving opening when the toothbrush is left standing in a cup or other container. Since this iontophoretic toothbrush contains a battery at the base end of the grip, it is necessary to provide a conductive bar which extends from adjacent to the bristles to a position close to the base end of the grip. Therefore, the weight of the entire toothbrush increases, and the cost of materials still needs to be reduced.

The iontophoretic toothbrush with an integral head and grip also has the problem that it is very difficult to set a conductive bar at an accurate position at the time of molding.

Furthermore, since the conventional iontophoretic toothbrush is formed in a mildly curved shape from the head to the conductive plate attached to the grip, there is a possibility that the battery contained in the grip may short-circuit due to a liquid such as saliva dripping from the head when the toothbrush is used.

With a normal toothbrush as well, it is required to make only the head studded with bristles disposable and replaceable and to make the head as short and small as possible.

Furthermore, since a battery tester, which detects the effectiveness of a battery contained in the iontophoretic toothbrush, has a complicated structure and is expensive, it is rarely used in domestic life. Accordingly, this brings about problems such that a user may use an iontophoretic toothbrush with a non-effective battery, and that a use may dispose of an iontophoretic toothbrush even if the battery is still effective.

An aim of this invention is to solve the above-described conventional problems and to provide a more inexpensive iontophoretic toothbrush capable of satisfying consumers' demands as well as a battery tester for detecting the effectiveness of a battery contained in a toothbrush or iontophoretic toothbrush.

Another aim of this invention is to accomplish easy positioning of a conductive bar in place in the iontophoretic toothbrush with an integral head and grip, when molding the toothbrush, and to reduce a manufacturing cost of the iontophoretic toothbrush.

In order to attain the above-described objectives, the Inventors of this invention attempted to reduce a manufacturing cost of the iontophoretic toothbrush, especially to simplify the manufacturing process, and they thereby completed this invention. Namely, this invention provides an iontophoretic toothbrush which comprises a head studded with bristles and a grip which receives an battery, and one electrode of the battery is electrically conductible with the bristles, while the other electrode of the battery is electrically conductible with a conductive plate which is placed on at least a part of the outside surface of the grip. The conductive plate has a U-shaped cross section, and inclined portions are formed on the outside surface of the grip in order to expand and guide the open end edges of the conductive plate when the conductive plate is attached to the grip.

The head and the grip are separate members, and the head may be made attachable to and detachable from the grip. In this case, a step portion may be formed at a position between the bristles and the conductive plate. Moreover, a bar made of conductive materials projects from the grip and is connected to one electrode of the battery. It is preferable that the head includes: a bar receiving portion to receive the bar when the head is attached to the grip; and a liquid path which communicates the bristles with the bar receiving portion to make the bristles and the bar electrically conductible by using liquid as medium. Moreover, it is preferable that the innermost end or the area adjacent thereto of the bar receiving portion is constructed to hold at least the tip or the area adjacent thereto of the bar received.

Further, a bar, which is made of conductive materials and which is connected to one electrode of the battery, may be provided at the grip. Also, the head includes: a conductive member to be connected to the bar when the head is attached to the grip; and a liquid path which communicates the bristles with the conductive member to make the bristles and the bar electrically conductible by using liquid as medium.

The head and the grip of this invention may be constructed in a united single member.

Moreover, this invention provides an iontophoretic toothbrush which comprises: a head studded with bristles; a grip which is integral with the head and which receives an battery in a substantially disc shape; and a conductive plate which is placed on at least a part of the outside surface of the grip. One electrode of the battery is electrically conductible with the bristles through liquid, while the other electrode of the battery is electrically conductible with the conductive plate.

The iontophoretic toothbrush of this invention may be constructed so as to further comprise a conductive bar of which one end is connected to one electrode of the battery, and of which the other end reaches close to the bristles of the head. The other end of the conductive bar may be electrically conductible with the bristles through a conductive path in which liquid exists at least partially.

A recess is formed in a direction perpendicular to the lengthwise axis of the grip at the position on one face of the body portion of the grip, and a battery can be placed in the recess.

A seal member can be disposed between the outer periphery of the recess and the back surface of the conductive plate to seal the recess in a watertight manner.

Moreover, this invention provides an iontophoretic toothbrush which comprises: a head studded with bristles; a grip which receives a battery; a bar made of conductive materials, with its one end connected to one electrode of the battery, and with its other end reaching close to the bristles of the head; a conductive plate which is connected to the other electrode of the battery, and which is placed on at least a part of the outside surface of the grip; and a conductive path in which saliva, extending from the bristles to the surface of the head, exists at least partially. The other end of the bar is electrically conductible with the bristles through the conductive path, the head and the grip are integrally molded in a state with the bar placed inside, and there is a space adjacent to the end face of the other end of the bar, such space corresponding to a member to be placed to support the end face at the time of molding.

A second space may exist adjacent to both side faces of the other end of the bar, such second space corresponding to a second member to be placed to support both the side faces at the time of molding.

Moreover, a third space may exist adjacent to the end face of the one end of the bar, such third space corresponding to a third member to be placed to support the end face at the time of molding.

Further, a fourth space may exist adjacent to both side faces of the one end of the bar, such fourth space corresponding to a fourth member to be placed to support both the side faces at the time of molding. Furthermore, a step portion can be formed at a position between the head and the conductive plate.

This invention also provides an iontophoretic toothbrush which comprises: a head studded with bristles; a grip to be held by a user; a neck portion between the head and the grip. In this iontophoretic toothbrush, the head is joined to the grip at the position of the neck portion in an attachable and detachable manner. A step portion may be formed at a position between the bristles and a portion gripped by a user.

Moreover, this invention provides a battery tester for detecting the effectiveness of a battery contained in an iontophoretic toothbrush. The battery tester comprises: a body consisting of a thin plate; and a light emitting means which is retained by the body and in which a pair of leads extend from an illuminant in a substantially symmetric manner. The illuminant is secured at the body, a pair of the leads bend toward the same direction and protrude outwardly from the body.

The above-mentioned thin plate can be composed of paper and/or synthetic resin. The body can be constructed by folding up a thin plate in half or by placing two thin plates one over another, and the light emitting means can be retained between the folded parts of the thin plate or the laminated thin plates. One of the leads can be connected to a conductive member which is connected to one electrode of the battery received in the iontophoretic toothbrush, and the other lead can be connected to a second conductive member which is connected to the other electrode of the battery. Also, a light emitting diode available on the market can be used as the light emitting means, without addition of any other members or any processing treatment.

Preferred embodiments of the present invention will now be described hereinbelow by way of example only with reference to the accompanying drawings, in which:

Figure 1 is a plan view of the iontophoretic toothbrush according to a first embodiment of the present invention.

Figure 2 is a side view of the iontophoretic toothbrush shown in Figure 1, a part being broken away.

Figure 3 a sectional view of the iontophoretic toothbrush of the invention taken through line I-I of Figure 1.

Figure 4 is a partially cutaway plan view of the main portion of a second embodiment of the invention.

Figure 5 is a partially cutaway side view of the main portion shown in Figure 4.

Figure 6 is a sectional view taken through line VI-VI of Figure 4.

Figure 7 is a perspective view of the conductive plate used in the second embodiment.

Figure 8 is a plan view of the head according to the second embodiment.

Figure 9 is a partially cutaway side view of the head according to the second embodiment.

Figure 10 is a sectional view of the head taken through line X-X of Figure 9.

Figure 11 is a sectional view of the head taken through line XI-XI of Figure 9.

Figure 12 is a plan view of the tip portion of the grip used in the second embodiment.

Figure 13 is a side view of the tip portion of the grip used in the second embodiment.

Figure 14 is a side view of the tip portion of the grip shown in Figure 13.

Figure 15 is a sectional view of a conventional iontophoretic toothbrush taken at the same position as in Figure 3.

Figure 16 is a front view of the main portion of a third embodiment of the invention.

Figure 17 is a partially cutaway side view of the main portion shown in Figure 16.

Figure 18 is a partially cutaway side view of the main portion of a fourth embodiment of the invention.

Figure 19 is a front view of the main portion of a fifth embodiment of the invention.

Figure 20 is a partially cutaway side view of the main portion shown in Figure 19.

Figure 21 is a front view of the main portion of a sixth embodiment of the invention.

Figure 22 is a partially cutaway side view of the main portion shown in Figure 21.

Figure 23 is a plan view of a seventh embodiment of the invention.

Figure 24 is a partially cutaway side view shown in Figure 23.

Figure 25 is a sectional view taken through line III-III of Figure 24.

Figure 26 is a sectional view taken through line IV-IV of Figure 24.

Figure 27 is a sectional view taken through line V-V of Figure 24.

Figure 28 is a sectional view of molds used for manufacturing the iontophoretic toothbrush of the seventh embodiment of the invention.

Figure 29 is a plan view of the lower mold of the molds shown in Figure 28.

Figure 30 is a sectional view of the upper and lower molds in engagement with each other.

Figure 31 is a sectional view of the molds taken through line IX-IX of Figure 30.

Figure 32 is a sectional view of the molds taken through line X-X of Figure 30.

Figure 33 is a sectional view of the molds taken through line XI-XI of Figure 30.

Figure 34 is a partially cutaway side view of the main portion of an eighth embodiment of the invention.

Figure 35 is a plan view of the invention shown in Figure 34.

Figure 36 is a sectional view taken through line XVI-XVI of Figure 35.

Figure 37 is a sectional view taken through line XV-XV of Figure 35.

Figure 38 is a sectional view taken through line XVI-XVI of Figure 35.

Figure 39 is a sectional view of the molds used in the eight embodiment.

Figure 40 is a front view of one embodiment of the battery tester of the invention.

Figure 41 is a sectional view of one embodiment of the battery tester of the invention.

Figure 42 is an expanded view of one embodiment of the battery tester of the invention.

Figure 43 is a front view of a variation of the battery tester, showing the body base portion and the light omitting means.

Figure 44 is a sectional view of the variation of the battery tester.

Figure 45 is a front view of the variation of the battery tester,

The present invention is hereinafter explained based on embodiments shown in the drawings.

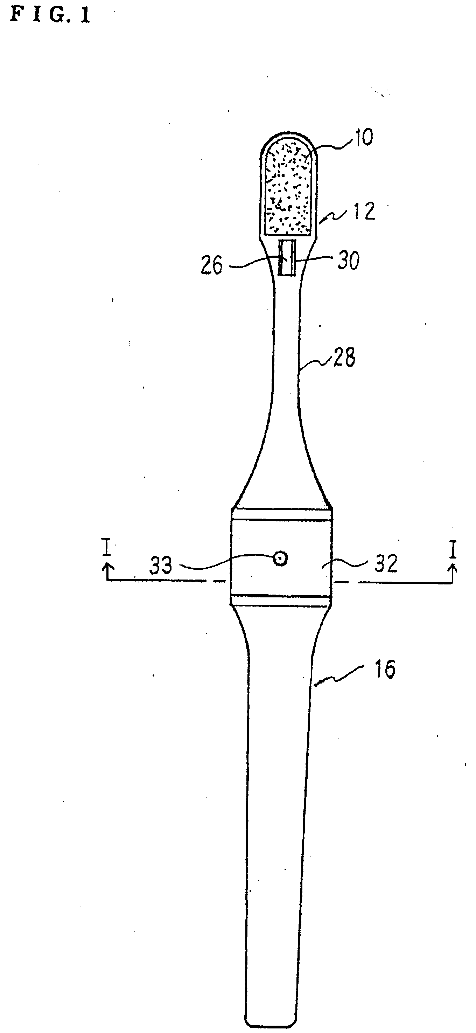

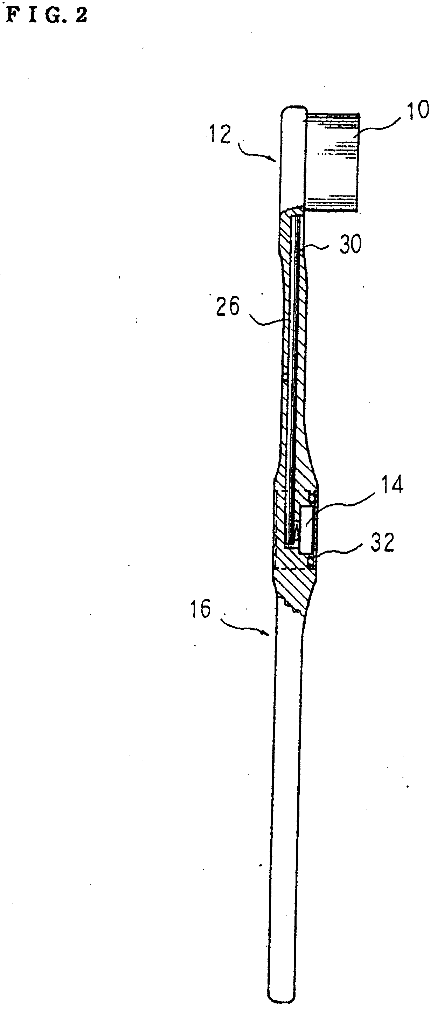

Figures 1 through 3 show a first embodiment of the invention. In the first embodiment, a head 12 studded with bristles 10 and a grip 16 containing a battery 14 are constructed integrally. The portion of the grip 16 close to the head 12 is formed to be relatively wide. A circular, battery-receiving opening 18 for receiving the battery 14 is formed at the above-mentioned wide portion of the grip 16. This battery-receiving opening 18 is formed in the direction perpendicular to the lengthwise axis of the grip 16.

A disc-shaped battery 14 such as a lithium battery is placed in the battery-receiving opening 18. A spring-receiving opening 22 with a relatively short diameter is formed in the middle of the bottom of and in continuation with the battery-receiving opening 18. This spring-receiving opening 22 receives, for example, a coil spring, plate spring, or other spring 24 in contact with one electrode of the battery 14. A bar 26 made of conductive materials is placed in the spring-receiving opening 22 in an exposed manner. As the bar 26 contacts with the bottom of the spring 24, the bar 26 is connected to one electrode of the battery 14.

The bar 26 extends in the axial direction toward the head 12 in the grip 16, passes through a thin neck portion 28, and ends at the position immediately before the bristles 10 of the head 12. Numeral 30 is a communicating groove, through which a part of the tip of the bar 26 is exposed on the surface of the head 12 where the bristles 10 are placed.

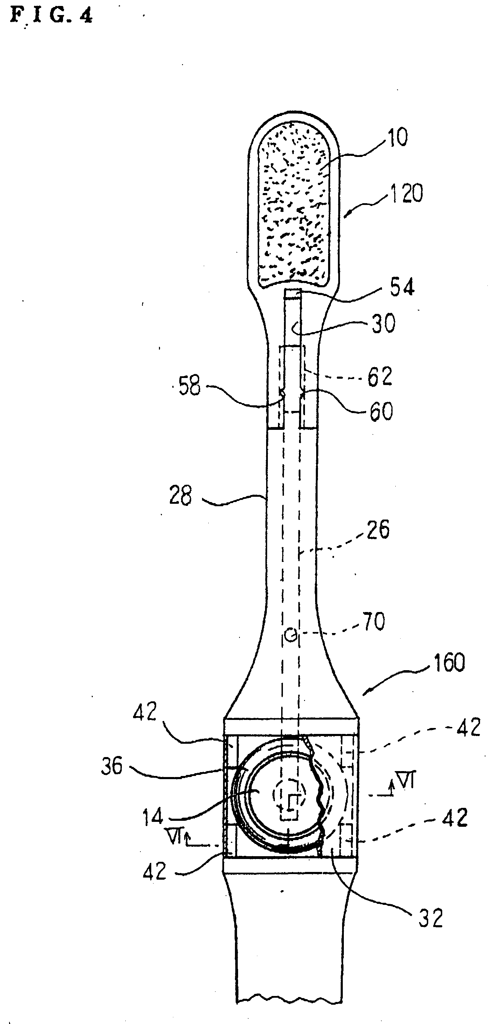

Specifically as shown in Figure 3, conductive plate 32 made of conductive materials is mounted on the grip 16 at the position where the battery is placed. Namely, the conductive plate 32 having a U-shaped cross section is attached to the grip 16 in the condition such that the conductive plate 32 touches, through a dented portion 33, the other electrode at the upper face of the battery 14. A groove 34 is formed around the battery-receiving opening 18 in order to isolate the battery 14 from outside in a watertight sealing manner, and an O-ring 36 for sealing is inserted into this groove 34 in a manner such that the 0-ring 36 contacts with the inside surface of the conductive plate 32. The conductive plate 32 has bent portions 38 which are formed by bending inwardly the open end edges of the conductive plate 32 having U-shaped cross sections. The conductive plate 32 is prevented from falling off from the grip 16 by the impulsive engagement of these bent portions 38 with engagement grooves 40 formed at the bottom of the grip 16.

Inclined portions 42 are formed symmetrically at both side faces of the above-described portion of the grip 16, and each of these inclined portions 42 has a slope which makes the width of the grip 16 gradually wider from the top of the grip to the bottom of the grip. Accordingly, the width of the top of the grip at this position is relatively narrow and is at least almost identical to, for example, the distance between a pair of the bent portions 38 at the open end edges of the conductive plate 32.

As publicly known, the function of the iontophoretic toothbrush having the above-described structure is as follows: when a user holds the grip 16 with his/her fingers touching the conductive plate 32 and brushes his/her teeth, the bristles 10 become wet with liquid such as saliva and the bar 26 enters into the electrically conductible state through a continuous path of liquid, including the communicating groove 30. Accordingly, an electric current flows in a route from the battery 14 through a human hand, body, teeth, the bristles 10, a liquid path including the communicating groove 30, and the bar 26, and then to the battery 14. The potential difference enhances the plaque removal effect at the time of brushing.

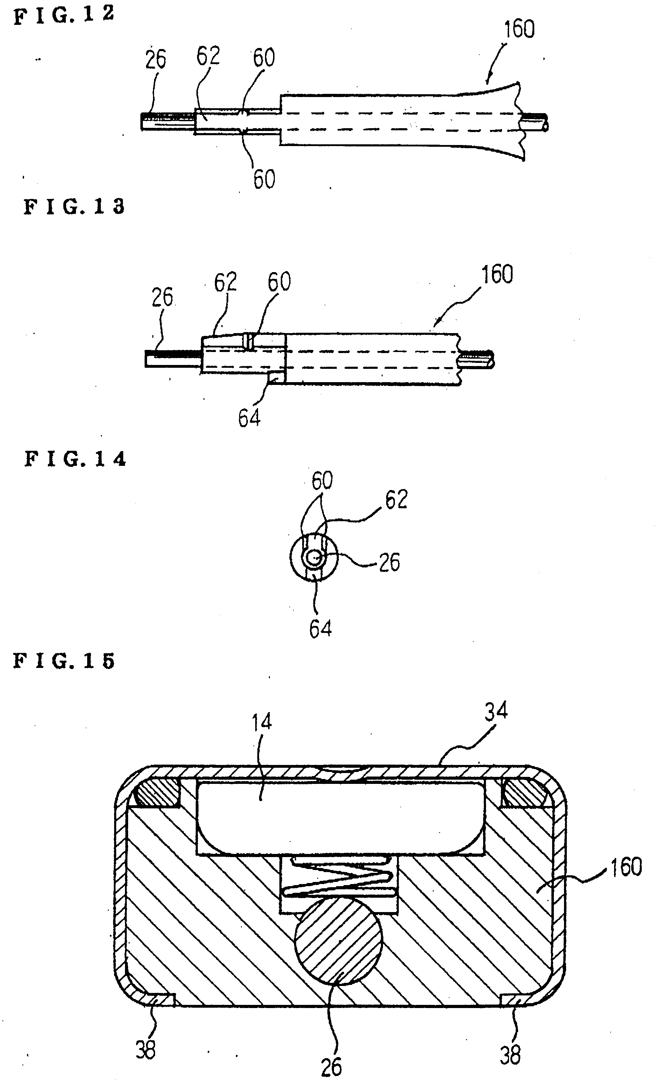

Of the manufacturing process of the iontophoretic toothbrush, the step of attaching the conductive plate 32 to the grip 16 has been very complicated and has required power. Namely, as shown in Figure 15 which is a sectional view of a conventional iontophoretic toothbrush taken at the same position as in Figure 3, since the section of the grip 16 is substantially rectangular, it is necessary to expand the bent portions 38 of the open end edges when the conductive plate 32 is attached to the grip 16 in order to make the distance between the bent portions 38 longer than the width of the grip 16. According to the first embodiment, however, the inclined portions 42 are formed at both side faces of the grip and, therefore, it is unnecessary for workers to expand the conductive plate 32 by hands. It is only necessary to push the conductive plate 32 toward the grip 16. Therefore, if the conductive plate 32 has the bent portions 38 as it does in the first embodiment, these bent portions 38 smoothly pass the top of the grip regardless of its width and then reach the inclined portions 42. By pushing the conductive plate 32 even further, the open end edges are expanded along the inclined portions 42. Subsequently, the bent portions 38 impulsively engage with the grooves 40 as the open end edges go beyond the bottom corners of the grip, thereby completing the step of attachment. As a result, it is possible to automate the step of attaching the conductive plate 32. It is also possible to further reduce the manufacturing cost of the iontophoretic toothbrush.

Since the head 12 and the grip 16 are constructed integrally, it is possible to make the bar 26 exposed only in the area adjacent to the bristles (only at the portion of the communicating groove 30). Accordingly, it is possible to enlarge the distance between this exposed position and the battery 14, thereby preventing the above-mentioned liquid from unnecessarily permeating into the iontophoretic toothbrush. As a result, leaking of the battery 14, corrosion of the electrodes, etc, can be hindered.

Moreover, since in the first embodiment the neck portion 28 can be formed by using the bar 26 as a core, it is possible to enhance the strength of the neck portion 28. As a result, the neck portion can be formed in a thin shape, thereby enhancing the easiness in brushing teeth. Since the bar 26 itself can be made thinner, it is possible to lighten the weight of the iontophoretic toothbrush and to reduce the cost of materials.

In the first embodiment, the conductive plate 32 is attached to the approximately middle portion of the outside surface of the iontophoretic toothbrush in a lengthwise direction, and the battery 14 is placed in the toothbrush at the position opposite to the conductive plate 32. Accordingly, a user can naturally touch the conductive plate 32 without a sense of uneasiness when holding the grip 16. Moreover, since the length of the bar 26 can be made shorter, it is possible to reduce the weight of the iontophoretic toothbrush.

The first embodiment is not the type of iontophoretic toothbrush with a disposable and replaceable head 12, the lifetime of the battery 14 may be set at a period of time during which the bristles 10 can remain good for use. Therefore, it is possible to miniaturize the battery 14. Because of this reason, it is also possible to provide an inexpensive and light iontophoretic toothbrush.

A second embodiment of this invention is hereinafter explained based on Figures 4 through 14. In the second embodiment, a head 120 and a grip 160 are separate members, and the head 120 is constructed to be attachable to and detachable from the grip 16. Therefore, it is possible to make only the head 120 disposable and replaceable with a new one. In the second embodiment, the same numerals are given to the same members as used in the first embodiment, and explanations about such members are omitted.

In the second embodiment, the head 120 is separable from the grip 160 at the position closer to the head 120, compared to a conventional iontophoretic toothbrush, that is, at the neck portion 28 which is constricted in a thinner shape. Accordingly, the head 120 is smaller than the conventional head.

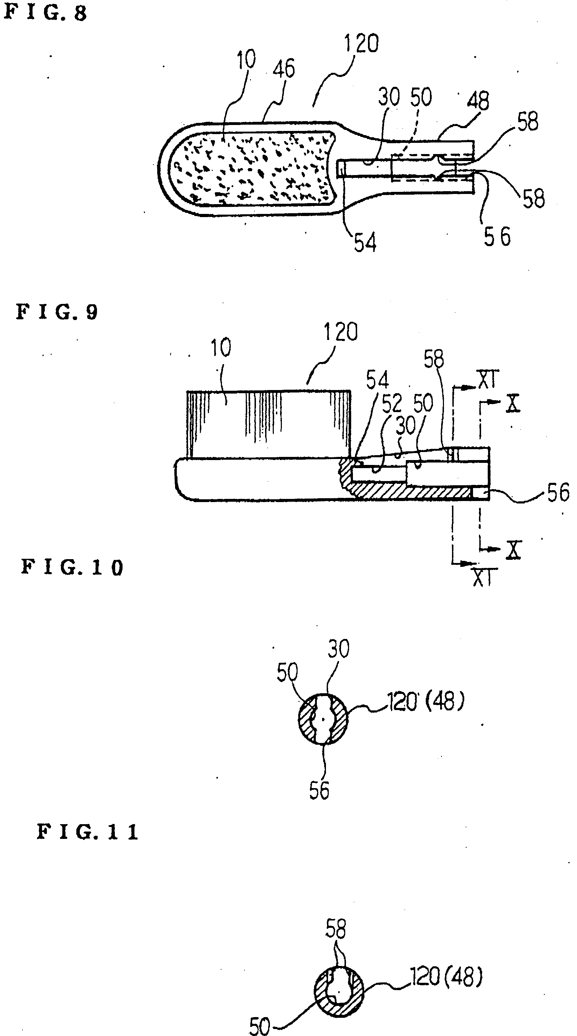

As specifically shown in Figures 8 through 11, the head 120 comprises a studded portion 46 at which the bristles 10 are studded, and a shank portion 48 extending from the studded portion as being generally constricted. As mentioned above, this shank portion 48 is formed to be very short, compared to a conventional one. A first hollow 50 is formed, starting from the end of the shank and extending in the axial direction of the shank portion 48, and a second hollow 52 is formed, which is smaller than the first hollow 50 in diameter and which communicates with the first hollow 50. These hollows form a bar receiving portion.

The upper area of the shank 48, that is, the area close to the studded portion 46 where the bristles exist 10, is cut in a slit shape in the axial direction from the end of the shank to the position adjacent to the bristles. This slit-shaped cut forms a communicating groove 30 as a part of the aforementioned liquid path.

Numeral 54 is a bank of the bar receiving portion, of which upper side is made open by the communicating groove 30, and of which innermost portion is kept unopened. The tip of the bar hereinafter described is held at this bank.

Numeral 56 is an engagement groove for preventing the head 120 from turning around. This engagement groove receives an engagement projection on the grip (hereinafter described). A pair of engagement indentations 58 are formed on a part of the inside wall of the communicating groove 30, and the engagement indentations 58 can be impulsively engaged with engagement projections (hereinafter described) on the grip.

As shown in Figures 12 through 14, the bar 26 protrudes from the end face of the grip 160 in the axial direction of the bar 26. More specifically, an extending portion 62, which covers the bar 26 and has a pair of engagement projections 60 at upper side faces, extends in a predetermined length. The bar 26 is exposed and extends only for a relatively short length from the end face of this extending portion 62. The extending portion 62 is inserted into the first hollow 50 of the head 120, and the protruding bar 26 is inserted to the second hollow 52 until the tip of the bar 26 reaches the innermost portion of the second hollow 52. The engagement projections 60 impulsively engage with the engagement indentations 58 (Figure 4), thereby preventing the head 120 from easily fallen off from the grip in the axial direction. Namely, this structure makes it possible to join the head 120 to the grip in the axial direction in one step. Such an axial-directional joining structure is provided so that once they are joined together, the head 120 cannot be separated from or fallen off from the grip 160 in the axial direction unless a predetermined amount or more of the power is applied to the head. Since this structure is formed by making use of the upper side faces of the extending portion 62, it is unnecessary to make such portion wider or thicker and, therefore, the constricted neck portion in a thin shape can be maintained as it is.

Numeral 64 of Figure 13 is an engagement projection to be engaged with the engagement groove 56 of the head 120. This detent structure is provided so that the engagement of the engagement projection 64 with the engagement groove 56 prevents the head 120 from turning around and secures the head 120 at the grip 160. This structure is provided on one side (lower side) of the bar 26, the position opposite to that of the axial-directional joining structure, thereby preventing the neck portion from becoming thicker. Moreover, the structure of the tip of the bar 26 securely held by the bar receiving portion by virtue of the existence of the bank 54 functions especially as a brushing pressure supporting structure which receives pressure imposed on the head 120 at the tip of the bar at the time of brushing.

The head 120 and the grip 110 are constructed to be attachable and detachable at the thin constricted neck portion by making use of the axial direction joining structure by virtue of the engagement of the engagement indentations 58 with the engagement projections 60, the detent structure by virtue of the engagement of the engagement groove 56 and the engagement projection 64, and the brushing-pressure-supporting structure of the tip of the bar and the bank 54. Nevertheless, it is unnecessary to make the neck portion thicker. The head 120 is securely joined to the grip with high rigidity, thereby preventing the head 120 from falling off during the use. Specifically in this embodiment, since the length of the actually protruding portion of the bar 26 is extremely short, even if the diameter of this bar 26 is made shorter in order to reduce the cost of materials, the strength of the bars 26 will never be detracted.

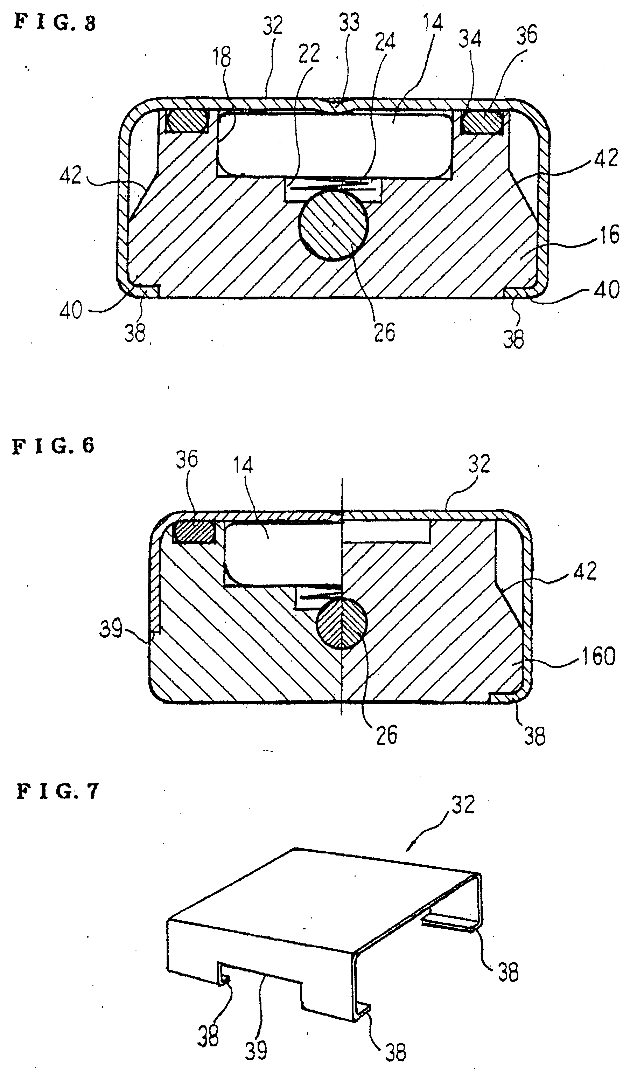

Figure 6 is a sectional view taken through line VI-VI of Figure 4. In the second embodiment, the inclined portions 42 on the side faces of the grip 16 are provided only at four corners as seen from above in Figure 4. In the first embodiment in which the inclined portions 42 are provided respectively in a continuous form, that is, one continuous inclined portion 42 for each side face of the grip, the width of this portion of the grip 160 cannot but become wider as the inclined portions 42 should be kept out of the battery 14 and the O-ring 36. In order not to make the grip 160 wider, the inclined portions 42 are formed only at four corners by keeping out of the area where the battery, etc. protrudes and becomes widest in the widthwise direction so that the width of the grip 160 does not have to be made wider. As shown in Figure 7, the conductive plate 32 is constructed to have indentations 39 in the middle of the side faces. Accordingly, these indentations end in the middle of the side faces of the grip 160 as shown in Figure 6. In the second embodiment as well, it is unnecessary to expand the open end edges of the conductive plate 32 in order to attach it to the grip 160, and the conductive plate 32 can be attached simply by pushing it into a predetermined position. The pushing force causes the bent portions 38 extending like legs to expand as they are guided along the inclined portions 42, thereby completing the attachment.

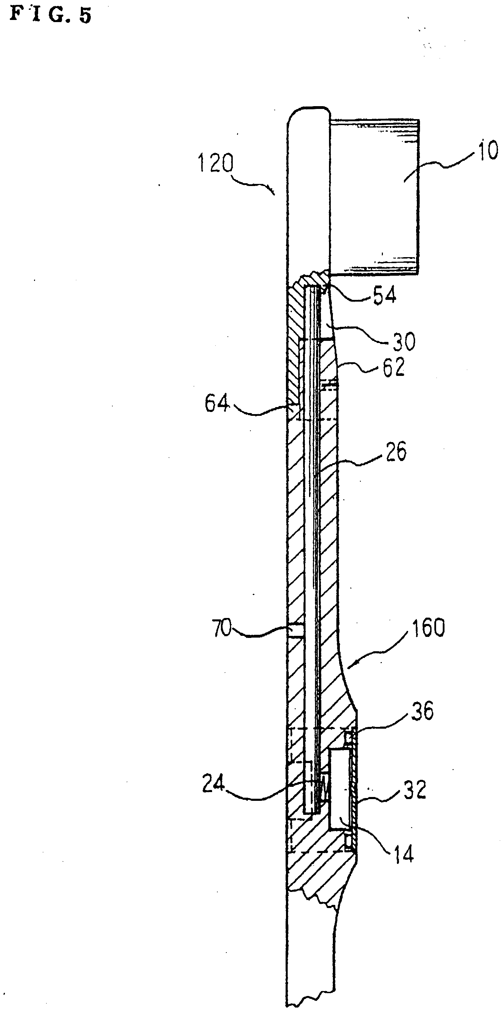

Numeral 70 in Figures 4 and 5 is a hole into which a pin (not shown) for securing the bar 26 at a predetermined position on the grip 160 at the time of molding the grip 160, is to be inserted. Since the bar 26 is exposed so that it can be seen through this hole 70, the hole 70 is utilized for inserting a lead of a battery tester as described later.

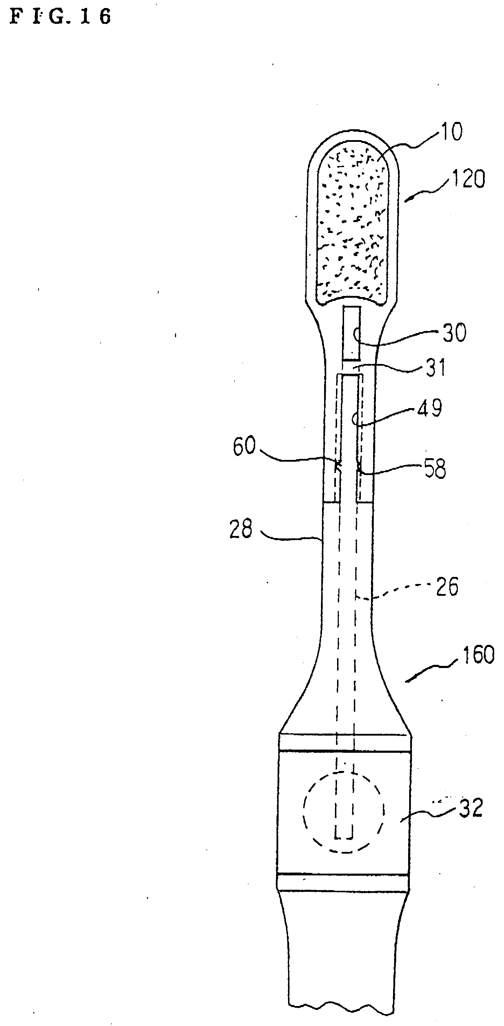

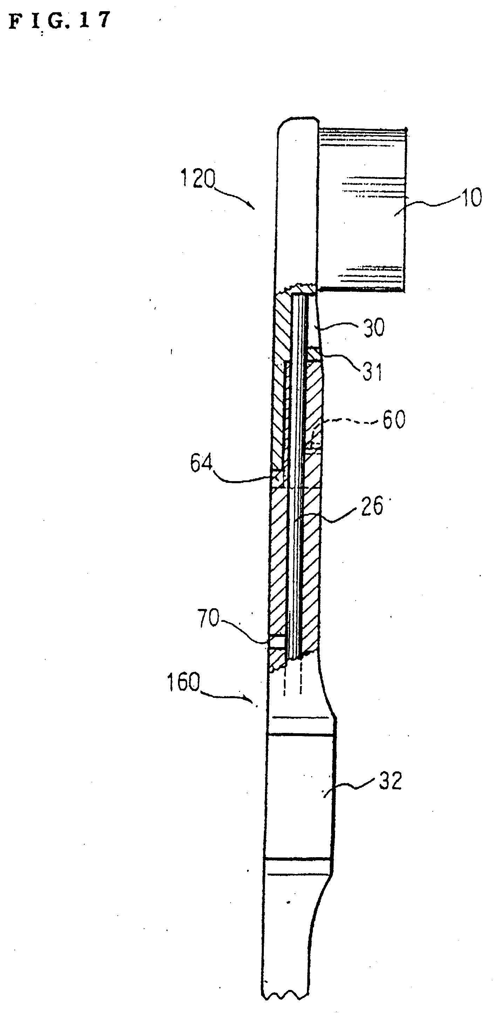

Figures 16 and 17 show a third embodiment of this invention. While in the second embodiment, the communicating groove 30 is formed in a slit extending to the end of the shank portion, and the engagement indentations 58 as the axial-directional joining structure are provided on both sides of the communicating groove 30, in the third embodiment, the communicating groove 30 is independent of the axial-directional joining structure. Namely, the communicating groove 30 is separated from the slit portion 49 having the engagement indentations 58 by a barrier 31 which is integral with the head 120. In the third embodiment, the engagement of the barrier 31 and the bar 26 constitutes the aforementioned brushing-pressure supporting structure. Therefore, the bank 54 of the second embodiment is not necessarily required.

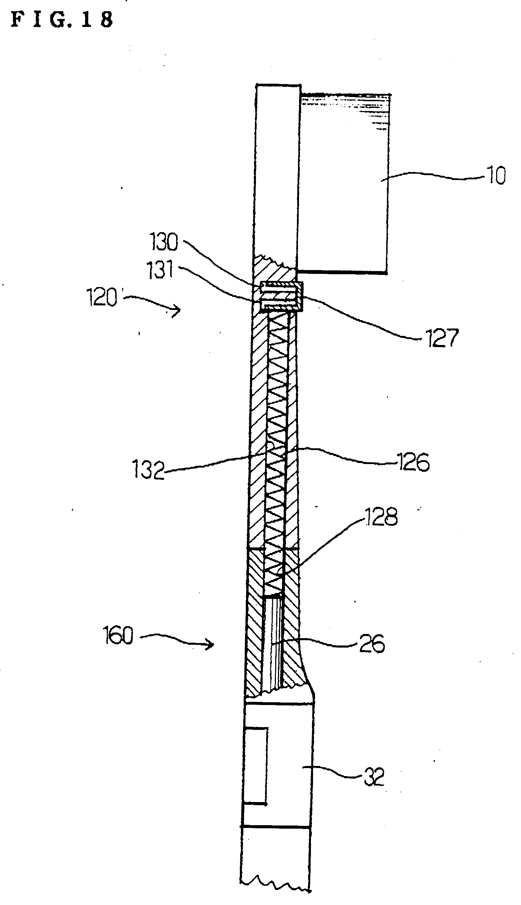

Figure 18 shows a fourth embodiment of this invention. In the fourth embodiment, the bar 26 does not protrude from the end face of the grip 160, but ends in the grip 160 at a position back from the end face of the grip 160. On the end face of the grip 160, a groove 128 is formed which is open from the end face of the grip 160 to the tip of the bar 26.

As shown in Figure 18, a conductive plate 127 having a U-shaped cross section is attached to the head 120 adjacent to the bristles as both the open end edges of the conductive plate 127 are inserted respectively into grooves 130 and 131 and a part of the conductive plate 127 is exposed on the surface where the bristles are studded. A shaft hollow 132, which communicates with the groove 131, extends in the lengthwise direction of the head 120 and passes through the head 120 until its end face. A spring 126 made of conductive materials is inserted into this shaft hollow 132. One end of the spring 126 is secured at the conductive plate 127 by an appropriate means, and the other end of the spring 126 extends out of the end face of the head 120. This spring 126 passes through the communicating portion between the groove 131 and the shaft hollow 132, and is secured at and electrically connected to the conductive plate 127. The length of the portion of the spring 126 protruding from the end face of the head 120 is made longer than the depth of the groove 128 formed in the grip 160.

When the head 120 having the above-described structure is attached to the grip 160, the tip of the spring 126 extending from the end face of the head 120 is inserted into the groove 128 formed at the end face of the grip 160. This causes the bar 26 to be electrically connected to the conductive plate 127 by a biasing force of the spring 126 with certainty.

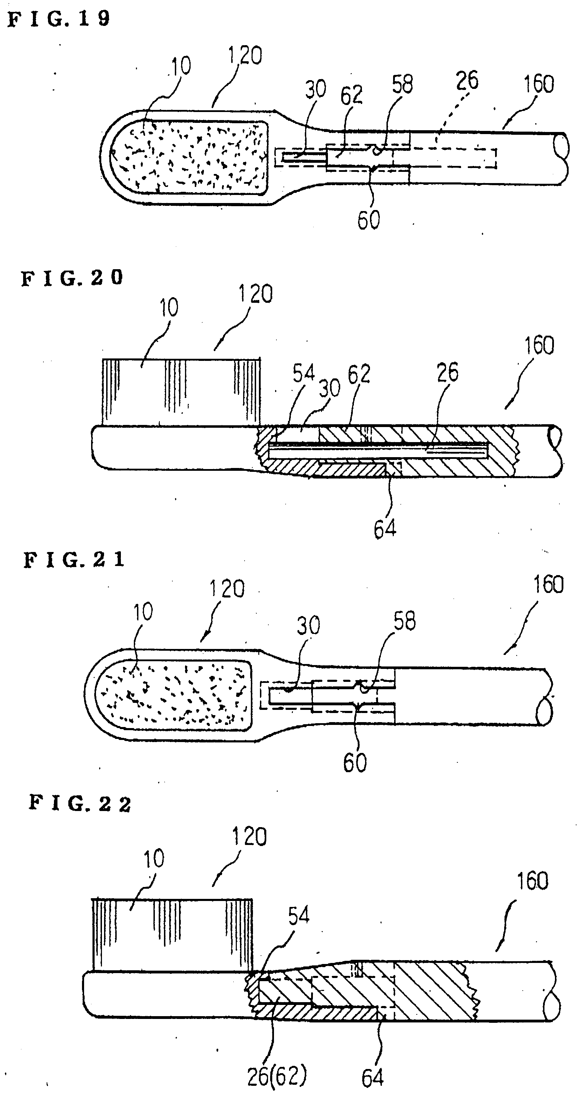

Figures 19 and 20 show a fifth embodiment of this invention. In the fifth embodiment, the structure of attaching or detaching the head 120 to or from the grip 160 as described in the second embodiment is applied to a normal toothbrush so that it is possible to make only the small head disposable and replaceable, thereby avoiding waste of resources. In the fifth embodiment, the identical or corresponding portions are indicated by the same numerals as used in the second embodiment, and detailed explanations about such portions are omitted. Namely, the bar 26 should preferably be made of materials with higher rigidity, for example, metals, than synthetic resin which is the material of the grip 160. However, the bar 26 does not have to exhibit a conductive function, but it just functions as a shaft for supporting the head 120. The portion adjacent to the tip of the bar 26 is exposed through the communicating groove 30. This communicating groove 30 exists in order to provide the engagement indentations, which constitute the axial-directional joining structure, with necessary elasticity, and it does not function as a part of the liquid path as it does in the second embodiment.

Figures 21 and 22 show a sixth embodiment which is a variation of the fifth embodiment for a normal toothbrush. In the sixth embodiment, the bar 26 is not made of metals or other similar materials, and it protrudes from the grip as an integral part of the grip. In this case, since the bar 26 usually has lower rigidity compared to metals, the bar 26 used in the sixth embodiment is thicker than the bar 26 used in the fourth embodiment in order to provide sufficient rigidity.

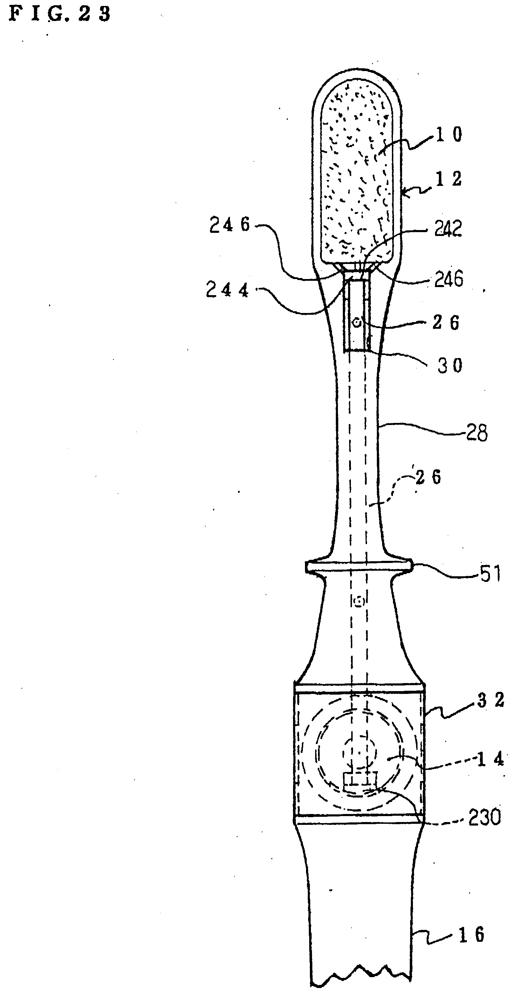

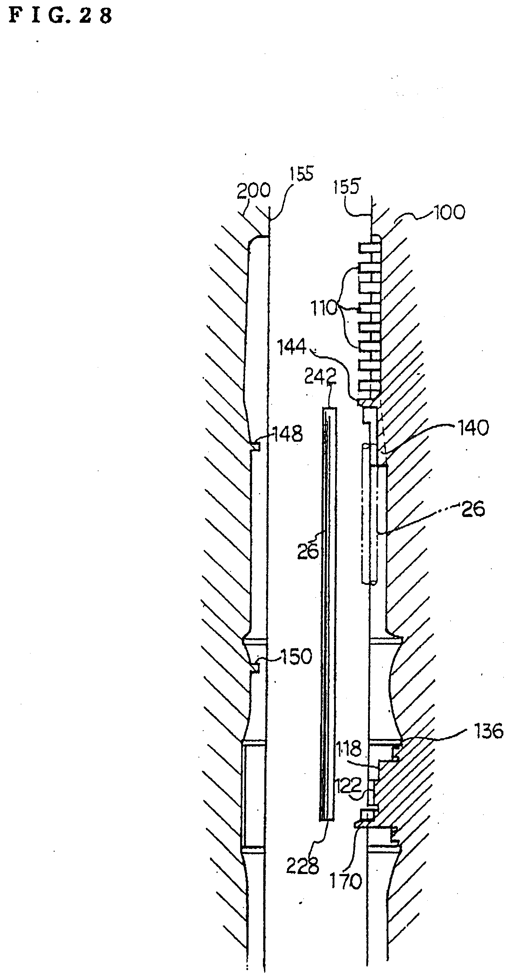

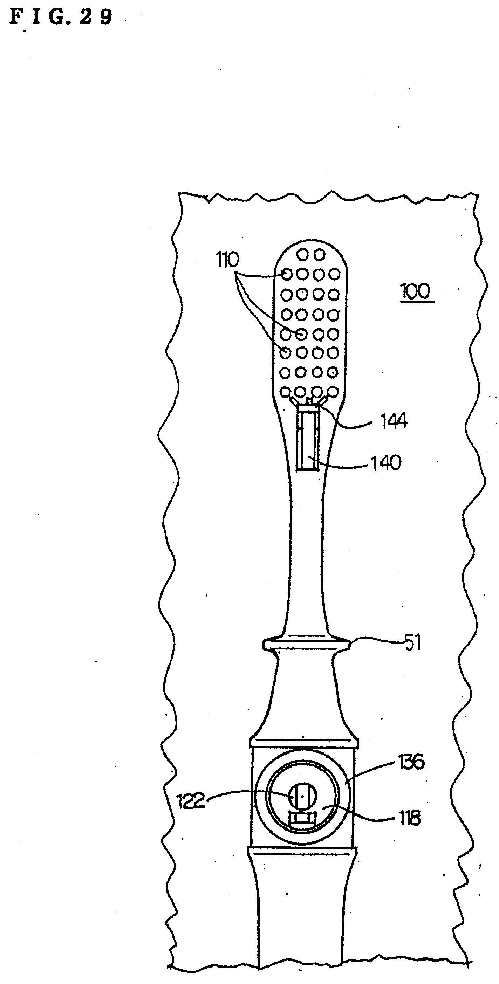

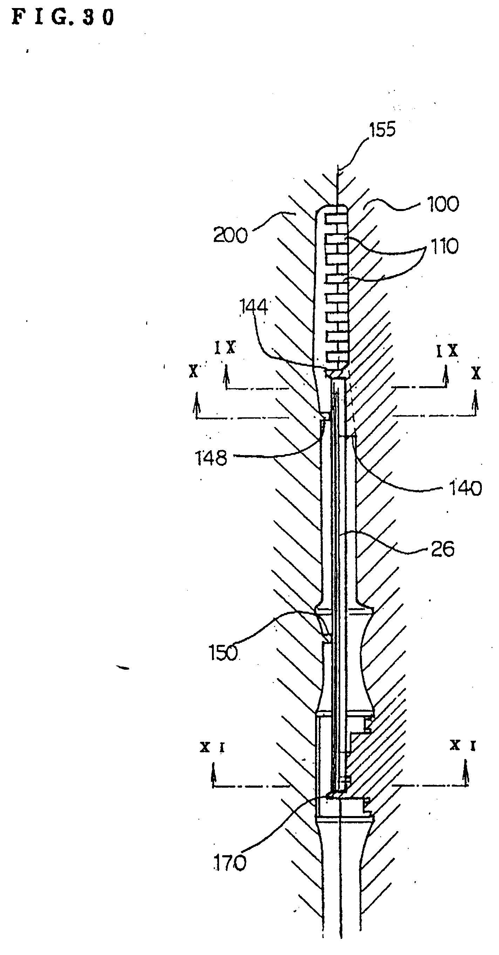

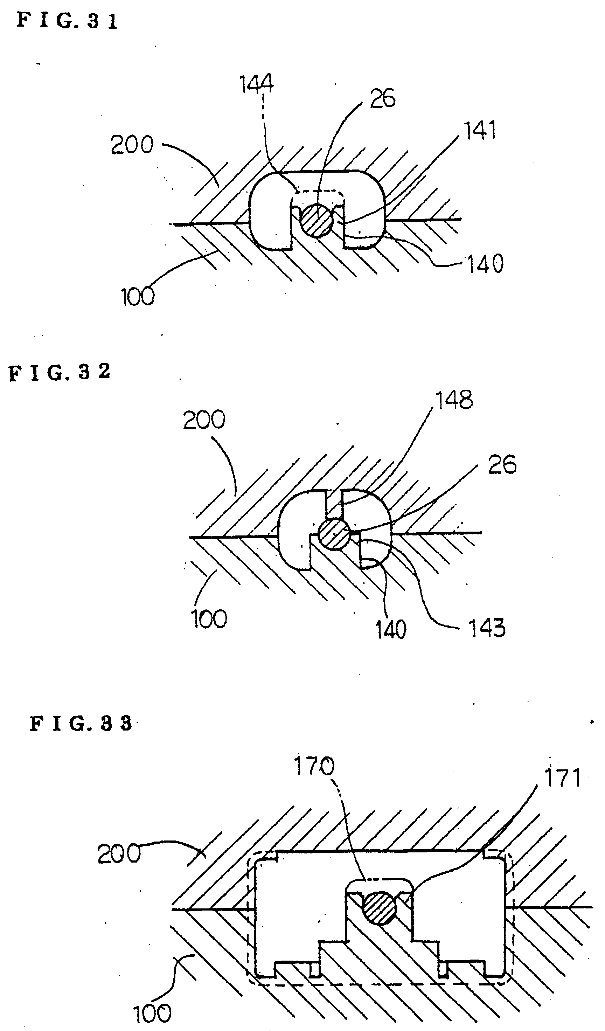

Figures 23 through 33 show a seventh embodiment of this invention. Figure 28 is a sectional view of molds when a left or upper mold 200 and a right or lower mold 100 are separated from each other. Figure 29 is a plan view of the lower mold. Figure 30 is a sectional view of the molds when the upper mold and the lower mold are placed one over another. Figures 31 through 33 show sectional views of the molds taken at appropriate positions. The same members as those used in the first embodiment are given the same numerals, and explanations about such members are omitted.

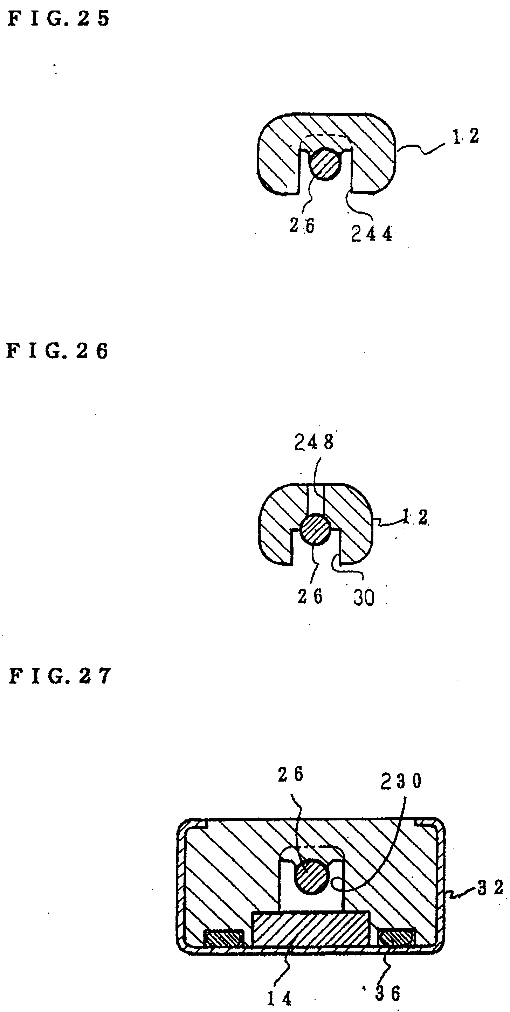

This iontophoretic toothbrush of the seventh embodiment is different from the iontophoretic toothbrush of the first embodiment in the following points: that, as shown in Figures 23 through 27, the end face 228 of the bar 26 on the side opposite to the bristles 10 reaches a supporting groove 230 which is in continuation with the base end bottom of the battery-receiving opening 18; that as shown in Figure 27, the bottom wall of the supporting groove 230 is opposed to the end face 228 with a predetermined distance; and that the supporting groove 230 is formed so that the distance between the battery-receiving opening 18 and the opposite end of the groove 230 in the direction perpendicular to the lengthwise direction of the bar 26, is made longer than the distance between the battery-receiving opening 18 and the end face 228 of the bar 26, thereby forming a space adjacent to the end face 228. Another difference between the iontophoretic toothbrush of the seventh embodiment and that of the first embodiment is that the outside periphery of the base end of the bar 26 is also partially exposed in the supporting groove 230. Namely, a space exists between at least both side faces of the base end of the bar 26 and the inside walls of the supporting groove 230.

An end face 242 and its surrounding area of the bar 26 on the side close to the bristles 10 are constructed similarly to the base end side of the bar 26. Namely, a supporting groove 244 exists so as to form a space adjacent to the end face 242, and the tip portion and outside periphery of the bar 26 are also exposed in the supporting groove 244, thereby providing a space around both side faces of the bar 26. This supporting groove 244 is formed as a part of the communicating groove 30.

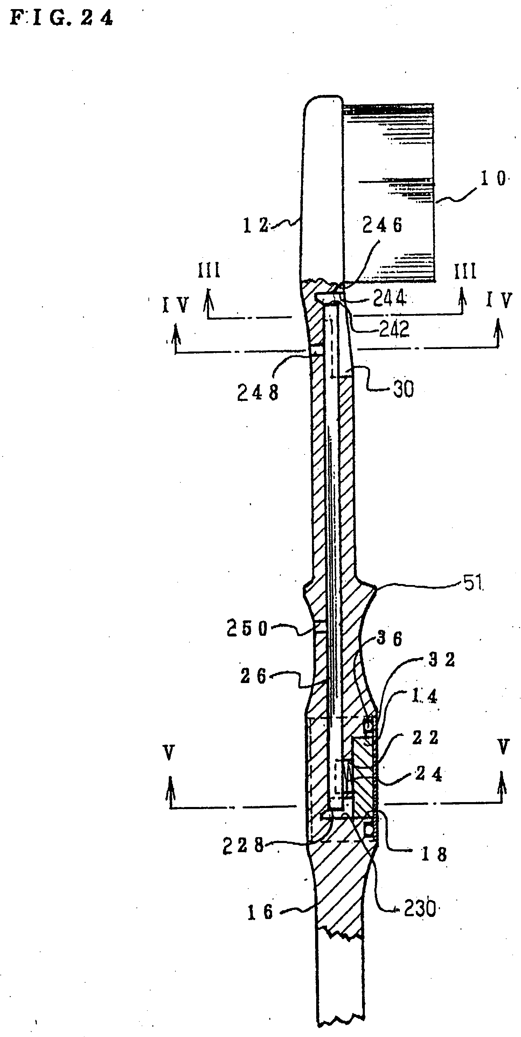

As shown in Figures 23 and 24, a step portion 51 protruding outwardly is formed around the neck portion 28. By virtue of the existence of this step portion 51, even if some liquid such as saliva drips from the bristles 10 of the head 12 when the iontophoretic toothbrush is used, the step portion 51 blocks penetration of the liquid, thereby preventing the battery from leaking.

This step portion 51 is preferably formed in a brim shape as shown in the drawings. However, it should not be limited to this shape, and the step portion 51 may be formed, for example, in a depressed dent shape. This step portion 51 is effective for not only the type of iontophoretic toothbrush with an integral head and grip, but also for the type of iontophoretic toothbrush with a head and a grip which can be separated. Moreover, the step portion 51 is also effective for a normal toothbrush which does not function as an iontophoretic toothbrush, because it is capable of preventing a toothpaste or saliva from dripping from the bristles to the grip.

Numeral 246 indicates small grooves which are formed to extend from the surface of the head 12, where the bristles 10 are studded, to the communicating groove 30, specifically toward the supporting groove 244. The small grooves 246 are intended to make saliva easily run into the communicating groove 30 when the bristles 10 get wet with saliva. Numerals 248 and 250 indicate holes into which pins in a mold (upper mold) (hereinafter described) for supporting conductive bars are inserted.

An example of the method for manufacturing the iontophoretic toothbrush according to the seventh embodiment is hereinafter explained, especially about the shape of the molds, with reference to Figures 28 through 33. In the seventh embodiment, explanations are given about the case in which a vertical forming machine is used.

Concerning the lower mold 100, numeral 110 indicates respective projections for forming holes in which the bristles 10 are studded. Numeral 144 indicates a supporting projection for forming the supporting groove 244 adjacent to the end face 242 of the bar 26 on the side close to the bristles 10. Numeral 140 indicates a raised portion for forming the communicating groove 30. Numeral 136 indicates a ring-shaped projection for forming a groove in which the O-ring 36 is to be placed. Numeral 118 indicates a cylindrically raised portion for forming the battery-receiving opening 18. Numeral 122 indicates a cylindrical projection with a small diameter for forming the spring-receiving opening 22. Numeral 170 indicates a supporting projection for forming the supporting groove 230 adjacent to the end face 228 of the bar 26 on the side opposite to the bristles 10. On the other hand, in the upper mold 200, Numerals 148 and 150 indicates pins for respectively supporting the bar 26 from above.

In order to form the iontophoretic toothbrush with the bar 26 integrally contained inside, first the bar 26 is set at a predetermined position of the lower mold 100 as shown in a virtual line in Figure 28. Figure 30 shows the state of the molds after the bar 26 is set. The end face 242 of the bar 26 is supported by the supporting projection 144, and the other end face 228 of the bar 26 is supported by the supporting projection 170, thereby securely settling the axial direction of the bar 26.

As shown in Figures 31 through 33, at least side faces, especially both side faces of both ends, of the bar are held laterally between supporting walls 141, 143 and 171 of the lower mold 100. Accordingly, the position of the bar in the horizontal, widthwise direction is also securely settled by the supporting walls 141, 143 and 171 of the lower mold. Because of the existence of these supporting walls 141, 143 and 171, the aforementioned spaces are formed at least on both sides of both ends of the bar after the molding is completed.

As shown in Figures 30 and 32, when the upper mold 200 is put together with the lower mold 100, the bar 26 is supported by the pins 148 and 150 from above, thereby securely setting the bar 26 at a predetermined position. Engagement faces 155 of both the molds are positioned at a center line of the bar 26 to make it easier to take the formed toothbrush out of the molds.

A body of the iontophoretic toothbrush, containing the bar 26 inside, is formed by filling the hollow formed in the molds, as shown in Figure 30, with resin.

As described above, even if the bar 26 is integrally formed with the body of the toothbrush, positioning of the bar 26 can be performed easily and certainly. Therefore, the manufacturing process can be simplified, and mass production of the iontophoretic toothbrush is also possible. Since, specifically in the seventh embodiment, the end face 242 and side faces of the bar 26 on the side close to the bristles 10 are formed so that they are supported by the communicating groove 30 which functions as the liquid path. Because of this reason, the structure of this iontophoretic toothbrush is not complicated compared to the conventional iontophoretic toothbrushes, and its function will never be hindered. Since the bar 26 has a circular cross section, there is no determined circumferential direction to be set when the bar 26 is fed to the molds. This makes it easier to automate the operation of setting the bar 26 at the molds.

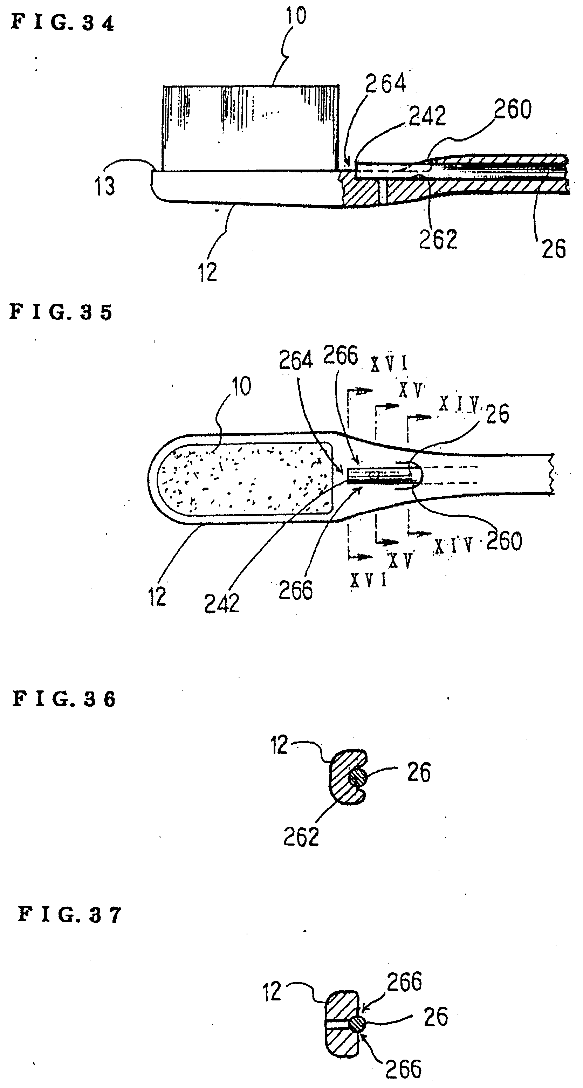

Figures 34 through 38 show an eighth embodiment of this invention. The eighth embodiment is different from the seventh embodiment only in that it does not have a communicating groove at the bar 26 on the side close to the bristles 10. Namely, the tip portion of the bar 26 on the side close to the bristles 10 extends and is exposed over the surface of the head 12 through a hole 260 in a curved area at the neck portion of the head 12, and ends at the position immediately before the bristles 10. Almost semicircular part of this exposed tip portion of the bar 26 is received by a retaining groove 262, having a semicircular cross section, formed on the surface of the head 12, while the remaining semicircular part of the tip portion of the bar 26 protrudes from the surface of the head 12, and the end face 242 fits the end face of the retaining groove 262. Hence the eighth embodiment also provides a space 264 adjacent to the end face 242 of the bar 26 and a space 266 adjacent to both side faces of the bar 26. As described above, there is no communicating groove in the eighth embodiment as there is in the seventh embodiment; and the conductive path is constituted by the surface of the head 12 between the bristles 10 and the exposed portion of the bar 26.

Figure 39 shows molds for forming the iontophoretic toothbrush of the eighth embodiment. In the lower mold 100, a supporting edge 364 for supporting the bar 26 in the axial direction is formed, and the edge 364 contacts with the semicircular portion of the end face 242 of the bar 26. This supporting edge 364 forms the above-mentioned space 264. The outside periphery of the exposed portion of the bar 26, especially both side faces, is held between inside walls 366 of the groove which is formed in continuation with the supporting edge 364 of the lower mold 100, thereby preventing the bar 26 from moving in the axial direction. The space 266 is formed by the existence of the inside walls 366 of the groove. The other end of the bar 26 on the side opposite to the bristles 10 is not different from the corresponding portion of the seventh embodiment. In the eighth embodiment, the engagement faces 155 correspond with the surfaces of the head. Because of this reason, the structure of the lower mold 100 with regard to the forming of the head can be further simplified, compared to the seventh embodiment.

In the seventh and eighth embodiments, the supporting grooves for supporting the end faces of the bar in the axial direction are provided at the respective end faces of the bar, and the conductive bar is supported at both ends in the axial direction by means of the supporting projections positioned at the supporting grooves. However, without limiting to the above structure, the toothbrush may be constructed so as to support only one end face of the bar by using a supporting projection.

Moreover, the seventh and eighth embodiments are constructed so as to hold the side faces of the respective end faces from both lateral sides. However, without limiting to the above structure, other means may be used, for example, the bar may be supported in the lateral direction by using magnets. Namely, in addition to the supporting structure at least at one end face of the bar, magnetic force may be applied to at least the lower mold and then the bar may be set at a desirable position by means of the support by the supporting projections and the binding power of the magnetic force.

In the seventh and eighth embodiments, explanations are given about the case in which a vertical forming machine is used. However, without limiting to this type of machine, a horizontal forming machine can also be used.

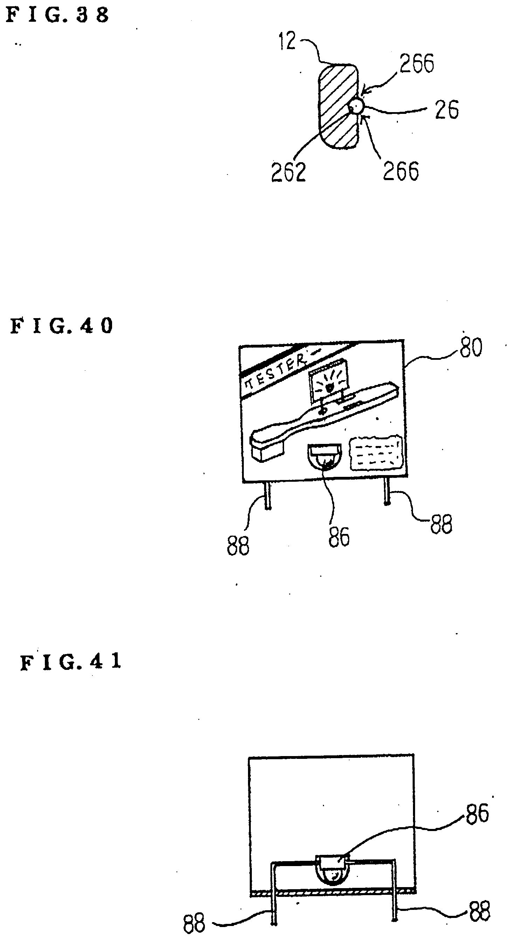

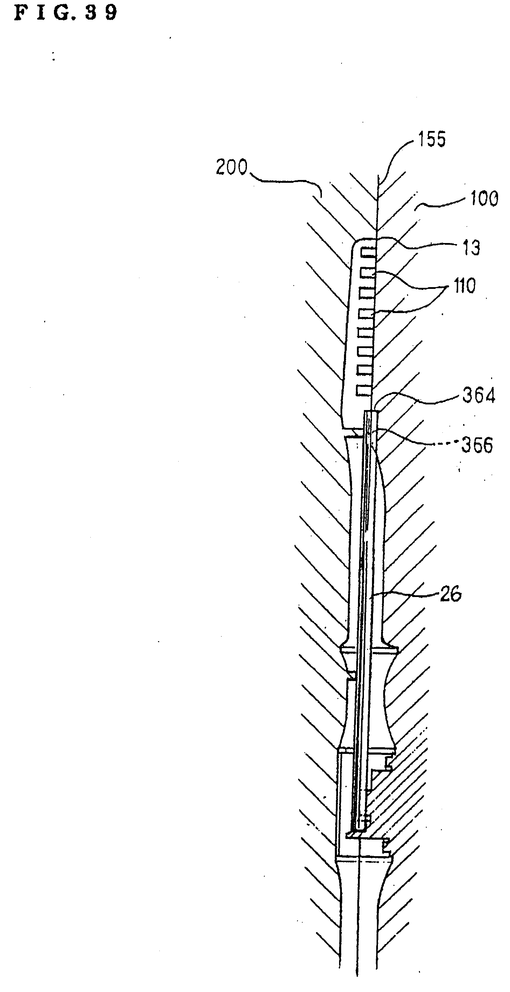

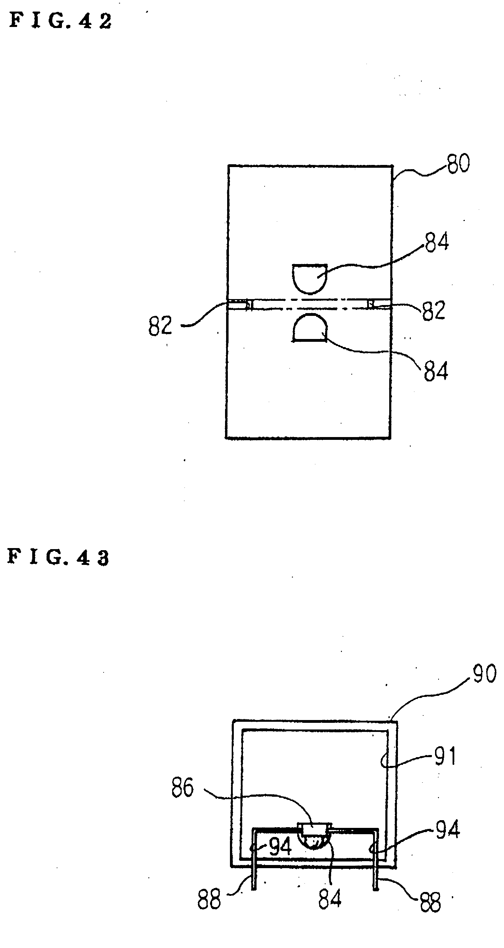

Figures 40 through 42 show a battery tester for detecting the effectiveness of the battery 14 contained in the iontophoretic toothbrush described in the second, third, fourth, seventh, or eighth embodiments. A body of this battery tester is made of a thin plate material such as paper or synthetic resin with relatively sufficient rigidity. As shown in Figure 42, this thin plate material is formed in a rectangular shape. This body 80 is folded in half and the folded parts of the body 80 are placed one over another, and a pair of holes 82 are formed along this center line at which the body 80 is folded. Moreover, substantially semicircular holes 84 are formed symmetrically about the folding line.

A light emitting diode available on the market can be used as a light emitting means. The invention does not require any additional treatment such as adding other members in order to extend leads of the light emitting diode available on the market.

The light emitting diode is usually constructed in a manner such that a pair of leads 88 extend almost symmetrically from an illuminant 86. At the time of use, the respective leads 88 are bent as shown in Figure 41, the body 80 is folded in half with the leads being inserted into the holes 82, and the illuminant 86 is placed in an opening formed by a pair of corresponding holes 84. The folded parts of the body 80 are glued together by an appropriate means such as an adhesive previously pasted over the folded parts of the body 80. The effectiveness of the battery can be detected, as shown in Figure 40, simply by inserting one of the leads 88 protruding from the body 80 into the hole 70 formed on the grip 160, and by making the other lead 88 contact with the bent portion 38 of the conductive plate 32 which is wound around the bottom of the grip. As a result, if the battery is effective, the illuminant 86 emits light and the effectiveness of the battery is confirmed. In addition, in order to explain how to use this battery tester, it is preferable to display a picture on the surface of the body 80 as shown in Figure 40 to specifically inform a user that an anode and a cathode of the leads should be made in contact with predetermined positions.

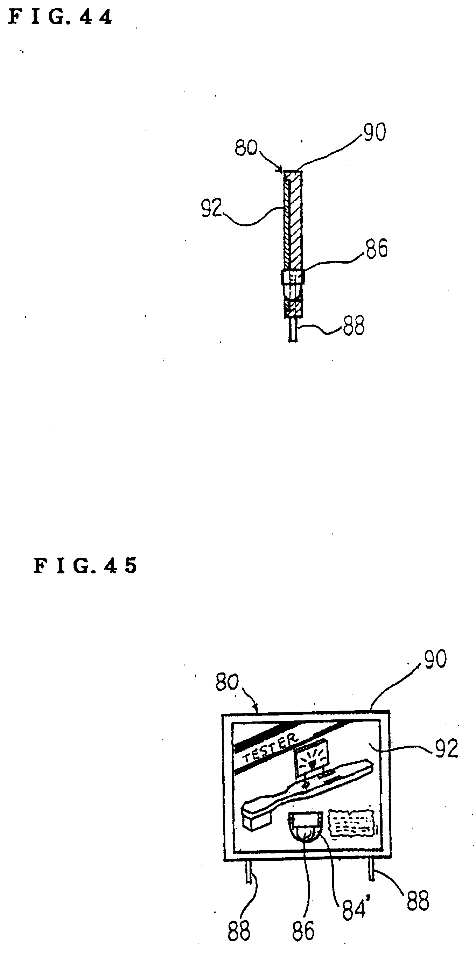

Figures 43 through 45 show a variation of the battery tester. A body 80 is constructed by engaging a rectangular recess 91 on the surface of a base 90 with a cover 92 which is a separate member from the base 90, and by gluing them together. A hole 84 for the illuminant 86 and grooves 94, in which the leads 88 extend, are formed on the base 90. A hole 84' for the illuminant 86 is formed also on the cover 92. Both the base 90 and the cover 92 may be made of paper or synthetic resin, or either one may be made of paper and the other may be made of synthetic resin. Further, the materials of the base 90 and the cover 92 do not have to be limited to either paper or synthetic resin, and any thin plate materials are acceptable as long they are available at a low price.

As explained above, this invention has a superior effect that it can provide the iontophoretic toothbrush or normal toothbrush at a very low price. Accordingly, the invention also has an effect that it is capable of satisfying the consumers' demands and of contributing to the health of human teeth.

## Claims

1. An iontophoretic toothbrush, comprising:
a head studded with bristles;
a grip which receives a battery;
a conductive plate which has a U-shaped cross section and which is placed on at least a part of the outside surface of the grip; and
inclined portions which are formed on said outside surface of the grip and which expand and guide open end edges of the conductive plate when the conductive plate is attached to the grip;
wherein one electrode of said battery is electrically conductible with said bristles, while the other electrode of the battery is electrically conductible with the conductive plate.

2. An iontophoretic toothbrush according to Claim 1, wherein said conductive plate has engagement portions at its open end edges, which protrude inwardly to hold the grip when the attachment of the conductive plate is completed, and said engagement portions are guided along the inclined portions of said grip to expand the open end edges of the conductive plate.

3. An iontophoretic toothbrush according to Claim 2, wherein said battery is placed in a recess formed on a part of the surface of the grip, and said conductive plate is placed in a manner such that said conductive plate contacts said other electrode of said battery and covers the battery.

4. An iontophoretic toothbrush according to Claim 3, wherein said inclined portions are positioned at four corners on the surface of the grip where said recess is formed, and the conductive plate has said engagement portions at the positions corresponding to the inclined portions at the four corners.

5. An iontophoretic toothbrush according to Claim 1, wherein said head is constructed in a manner attachable to and detachable from said grip.

6. An iontophoretic toothbrush according to Claim 5, wherein a step portion is formed at a position between said bristles and the conductive plate.

7. An iontophoretic toothbrush according to Claim 5, wherein a bar, which is made of conductive materials and which is connected to said one electrode of said battery, projects from said grip, and wherein said head includes a bar receiving portion to receive said bar when the head is attached to the grip, and a liquid path which communicates said bristles with the bar receiving portion to make the bristles and the bar electrically conductible by using liquid as medium.

8. An iontophoretic toothbrush according to Claim 7, wherein the innermost end or the area adjacent thereto of said bar receiving portion is constructed to hold at least the tip portion or the area adjacent thereto of the bar received.

9. An iontophoretic toothbrush according to Claim 5, wherein a bar, which is made of conductive materials and which is connected to said one electrode of the battery, is provided on said grip, and wherein said head includes a conductive member to be connected to said bar when the head is attached to the grip, and a liquid path which communicates said bristles with the conductive member to make the bristles and the bar electrically conductible by using liquid as medium.

10. An iontophoretic toothbrush according to Claim 1, wherein said head and said grip are constructed in a united single member.

11. An iontophoretic toothbrush, comprising:
a head studded with bristles;
a grip which is integral with said head and which receives a battery in a substantially disc shape; and
a conductive plate which is placed on at least a part of the outside surface of said grip;
wherein one electrode of said battery is constructed to be electrically conductible with the bristles through liquid, while the other electrode of said battery is electrically conductible with said conductive plate.

12. An iontophoretic toothbrush according to Claim 11, further comprising a conductive bar of which one end is connected to said one electrode of said battery, and of which the other reaches close to the bristles of said head, wherein the other end of said conductive bar is electrically conductible with said bristles through a conductive path in which liquid exists at least partially.

13. An iontophoretic toothbrush according to Claim 11, wherein a recess is formed in a direction perpendicular to the lengthwise axis of the grip at the position on one face of the body portion of said grip, where said conductive plate is mounted, and wherein a battery is placed in said recess.

14. An iontophoretic toothbrush according to Claim 13, wherein a seal member is disposed between the outer periphery of the recess and the back surface of said conductive plate to seal said recess in a watertight manner.

15. An iontophoretic toothbrush, comprising:
a head studded with bristles;
a grip which receives a battery;
a bar made of conductive materials, with its one end connected to one electrode of the battery, and with its other end reaching close to the bristles of the head;
a conductive plate which is connected to the other electrode of the battery, and which is placed on at least a part of the outside surface of said grip; and
a conductive path in which saliva, extending from the bristles to the surface of the head, exists at least partially,
wherein the other end of said bar is electrically conductible with the bristles through said conductive path, said head and said grip are integrally molded in a state with said bar placed inside, and there is a space adjacent to the end face of the other end of the bar, said space corresponding to a member to be placed to support said end face at the time of molding.

16. An iontophoretic toothbrush according to Claim 15, wherein there is a second space adjacent to both side faces of the other end of said bar, said second space corresponding to a second member to be placed to support both the side faces at the time of molding.

17. An iontophoretic toothbrush according to Claim 15, wherein there is a third space adjacent to the end face of the one end of said bar, said third space corresponding to a third member to be placed to support the end face at the time of molding.

18. An iontophoretic toothbrush according to Claim 17, wherein there is a fourth space adjacent to both side faces of the one end of said bar, said fourth space corresponding to a fourth member to be placed to support both the side faces at the time of molding.

19. An iontophoretic toothbrush according to Claim 15, wherein a step portion is formed at a position between said head and said conductive plate.

20. An iontophoretic toothbrush, comprising:
a head studded with bristles;
a grip which receives an battery;
a bar made of conductive materials, with its one end connected to one electrode of the battery, and with its other end reaching close to the bristles of the head;
a conductive plate which is connected to the other electrode of the battery, and which is placed on at least a part of the outside surface of said grip; and
a conductive path in which saliva, extending from the bristles to the surface of the head, exists at least partially,
wherein the other end of said bar is electrically conductible with the bristles through said conductive path, said head and said grip are integrally molded in a state with said bar placed inside, and there is a space adjacent to the end face of the one end of the bar, said space corresponding to a member to be placed to support the end face at the time of molding.

21. An iontophoretic toothbrush according to Claim 20, wherein there is a second space adjacent to both side faces of the one end of said bar, said second space corresponding to a second member to be placed to support both the side faces at the time of molding.

22. An iontophoretic toothbrush according to Claim 21, wherein there is a third space adjacent to the end face of the other end of said bar, said third space corresponding to a third member to be placed to support the end face at the time of molding.

23. An iontophoretic toothbrush according to Claim 22, wherein there is a fourth space adjacent to both side faces of the other end of said bar, said fourth space corresponding to a fourth member to be placed to support both the side faces at the time of molding.

24. A toothbrush, comprising:
a head studded with bristles;
a grip to be held by a user; and
a neck portion between said head and said grip,
wherein said head is joined to said grip at the position of said neck portion in an attachable and detachable manner.

25. A toothbrush according to Claim 24, wherein a step portion is formed at a position between said bristles and a portion gripped by a user.

26. A battery tester for detecting the effectiveness of a battery placed in an iontophoretic toothbrush, comprising:
a body consisting of a thin plate; and
a light emitting means which is retained by said body and in which a pair of leads extend from an illuminant in a substantially symmetric manner,
wherein said illuminant is secured at said body, and a pair of said leads are constructed to bend toward the same direction and to protrude outwardly from the body.

27. A battery tester according to Claim 26, wherein said thin plate is composed of paper and/or synthetic resin.

28. A battery tester according to Claim 27, wherein said body is constructed by folding up a thin plate or by placing two thin plates one over another, and said light emitting means is retained between the folded parts of the thin plate or the laminated thin plates.

29. A battery teeter according to Claim 26, wherein one of said leads is connected to a conductive member which is connected to one electrode of the battery placed in the iontophoretic toothbrush, and the other lead is connected to a second conductive member which is connected to the other electrode of the battery.

30. A battery tester according to Claim 26, wherein a light emitting diode available on the market is used as said light emitting means, without addition of any other members or any processing treatment.
